# EUROPEAN PATENT APPLICATION

(11) **EP 2 884 787 A1**
(43) Date of publication of application: **17.06.2015**
(21) Application number: 13306725.6
(22) Date of filing: 13.12.2013
(51) Int. Cl.: H04W 12/12, H04M 3/22

(54) **Method and device for managing a subscriber device**

(71) Applicant: Gemalto SA, 92190 Meudon (FR)
(72) Inventor: Mavrakis, Daniel, 13705 La Ciotat (FR); Zannin, François, 13705 La Ciotat (FR); Quetglas, Stéphane, 13705 La Ciotat (FR); Troadec, Hervé, 13705 La Ciotat (FR)

(57) **Abstract**

The invention relates to a method 20 for managing a subscriber device.

According to the invention, the method comprises the following steps. An interception step in which a device intercepts a request message 22 for requesting whether a mobile equipment has or has not been stolen. The request message includes data relating to a subscriber. The request message originates from a Mobile Switching Centre type entity 112 relating to a home mobile network 100 and is addressed to an Equipment Identity Register type entity 116 relating to the home mobile network. At least one abnormal operation detection step in which the device increments a counter, each time, the device detects or determines, within the intercepted message, one and the same subscriber that is used according to at least one predetermined abnormal operation condition. And a subscriber registration step in which if the counter matches a predetermined threshold, then the device stores the detected subscriber as belonging to a wireless bypass subscriber set.

The invention also relates to a corresponding device 114.

## Description

### Field of the invention:

The invention relates generally to a method for managing a subscriber device in a field of radio-communication networks.

In such a field, the subscriber device may be a subscriber terminal, like a mobile (tele)phone, or a so-termed Subscriber Identity Module (or SIM) box or other equivalent device.

Furthermore, the invention also pertains to a device for managing a subscriber device.

### State of the art:

As known per se, a use of a SIM-box, as a SIM token host device, that hosts one or several SIM cards, as SIM tokens, allows making an international phone call that originates from an out-of network subscriber and that appears as an in-network phone call.

The international phone call is routed from a calling party that is connected, over a foreign (mobile) network, via a Voice over Internet Protocol (or VoIP), through the SIM-box, to a called party. The called party is reached over a home (mobile) network.

Such an international phone call through the SIM-box constitutes a wireless bypass call that uses home network resources without using a normal international communication path.

However, it is desirable to prevent the use of such a SIM-box, as a wireless bypass device, that re-routes international phone calls while bypassing a normal international communication path.

There is a need of a solution that allows detecting that the SIM token host device constitutes a wireless bypass device operated by a dishonest operator.

### Summary of the invention:

The invention proposes a solution for satisfying the just herein above specified need by providing a method for managing a subscriber device.

According to the invention, the method comprises the following steps. An interception step in which a device intercepts a request message for requesting whether a mobile equipment has or has not been stolen. The request message includes data relating to a subscriber. The request message originates from a Mobile Switching Centre type entity relating to a home mobile network and is addressed to an Equipment Identity Register type entity relating to the home mobile network. At least one abnormal operation detection step in which the device increments a counter, each time, the device detects or determines, within the intercepted message, one and the same subscriber that is used according to at least one predetermined abnormal operation condition. And a subscriber registration step in which if the counter matches a predetermined threshold, then the device stores the detected subscriber as belonging to a wireless bypass subscriber set.

The principle of the invention consists in that, firstly, a device intercepts a message for requesting whether a mobile equipment has or has not been stolen or the like. The request message includes data relating to a subscriber. The request message is exchanged within a home network. Secondly, the device analyses whether the tracked subscriber is or is not used according to one or several abnormal operation conditions. If the tracked subscriber is used according to one predetermined abnormal operation condition, then the device increments a counter that has been initialised at a first analysis. Once the counter does match a predetermined threshold, the device registers the tracked subscriber as a wireless bypass subscriber.

Thus, the device detects and monitors a subscriber within a national signalling traffic that originates from a Mobile Switching Center (or MSC) type entity and addresses an Equipment Identity Register (or EIR) type entity. Such entities are included within the home network.

The device may thus observe that a SIM token host device which cooperates with a tracked subscriber device has a suspicious behaviour. Once the device has observed such a suspicious behaviour, the assumed mobile equipment is suspected as being a SIM-box type device or any other equivalent device, as a non-genuine mobile equipment.

Once the device considers the subscriber device as if it cooperates with a SIM-box type device, as a wireless bypass device, the device may undertake one or several actions. The undertaken action(s) may prevent the tracked subscriber device from being used for communicating, through its host device, as a SIM-box type device, with the home network.

Such an invention solution allows tracking a subscriber device that may be included within a wireless bypass device, as a router of an international communication with a called party included within a home network.

The invention solution allows protecting, based upon a tracked subscriber, from an associated subscriber device, as being involved within a wireless bypass communication.

Preferably, the at least one abnormal operation detection step comprises a first predetermined abnormal operation detection step in which the device detects that, within the intercepted message, for one and the same subscriber, an associated mobile equipment identifier does not match a previously detected reference mobile equipment identifier.

As soon as the device notices that a mobile equipment identifier which has been firstly associated with one subscriber during a previous communication and another mobile equipment identifier is secondly associated with the same subscriber, the device concludes that the subscriber device cooperates with a potential wireless bypass subscriber device.

According to a further aspect, the invention is a device for managing a subscriber device.

According to the invention, the device is adapted to intercept a request message for requesting whether a mobile equipment has or has not been stolen. The request message includes data relating to a subscriber. The request message originates from a Mobile Switching Centre type entity relating to a home mobile network and being addressed to an Equipment Identity Register type entity relating to the home mobile network. The device is adapted to increment a counter, each time, the device detects or determines, within the intercepted message, one and the same subscriber that is used according to at least one predetermined abnormal operation condition. And the device is adapted to store, if the counter matches a predetermined threshold, the detected subscriber as belonging to a wireless bypass subscriber set.

As device, it may be a network entity which is comprised within the home network, like a so-termed proxy-EIR.

It is to be noted that the device may be a network entity, a proxy-EIR, the EIR or a server.

The device may behave like an EIR, notably if the home network is not equipped with an EIR entity.

### Brief description of the drawings:

Additional features and advantages of the invention will be more clearly understandable after reading a detailed description of one preferred embodiment of the invention, given as one indicative and non-limitative example, in conjunction with the following drawings:
   - Figure 1 illustrates a simplified diagram of a SIM-box that is connected to a home network that includes, according to one invention embodiment, a proxy-EIR, as a device for managing a subscriber device, that is an intermediate entity between an MSC and an EIR;
   - Figure 2 represents one message flow, according to an invention method for managing a subscriber device between the entities of figure 1, so that the proxy-EIR is able to monitor a subscriber communication with the home network and to suspect a presence of a subscriber device that is included within a SIM-box type entity; and
   - Figure 3 is a flow chart of an exemplifying method for managing a subscriber device of figure 1.

### Detailed description:

Herein under is considered a case in which the invention method for managing a subscriber device is implemented by a proxy-EIR, as a device for managing a subscriber device.

Naturally, the herein below described embodiment is only for exemplifying purposes and is not considered to reduce the scope of the invention.

Instead of a proxy-EIR, the device for managing a subscriber device may be an EIR or a server.

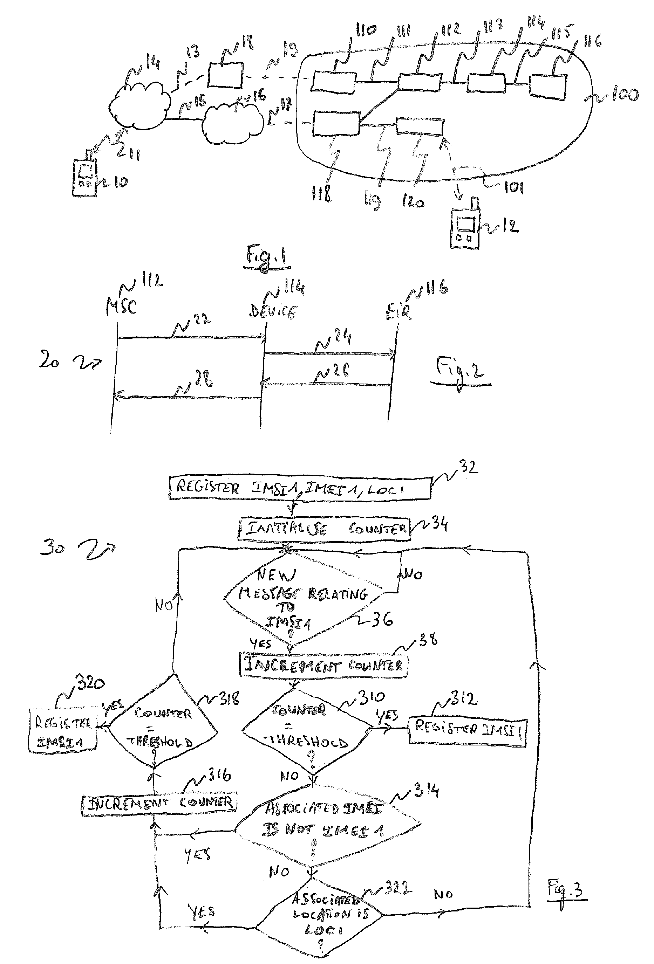

**Figure 1** shows schematically a home mobile network 100 that is connected to, on the one hand, one foreign mobile network 14 and a transit network 16 and, on the other hand, a SIM-box type entity 18.

For sake of simplicity, the SIM-box type entity 18, the home mobile network 100 and the foreign mobile network 14 are termed herein after the SIM-box 18, the home network 100 and the foreign network 14 respectively.

The home network 100 and the foreign network 14 may be constituted by a Global Service for Mobiles (or GSM), a Universal Mobile Telecommunications System (or UMTS), a Code Division Multiple Access (or CDMA) and/or a Long Term Evolution (or LTE) type network(s).

The network set is not exhaustive but only for exemplifying purposes.

The transit network 16 is a network which passes traffic between the foreign network 14 and the home network 100.

A calling entity 10 establishes an international phone call with a called entity 12.

The calling entity, like a mobile phone, that is termed supra the first phone 10 and the called entity, like another mobile phone, that is termed supra the second phone 12.

The first phone 10 is connected, over a Radio-Frequency (or RF) link 11, to the foreign network 14.

The foreign network 14 is connected schematically, over a VoIP (not represented), through a link 13, to the SIM-box 18.

The foreign network 14 is connected, through a wire link 15, to the transit network 16.

The transit network 16 is schematically connected, through an international link 17, to an international home gateway 118.

The international home gateway 118 is, e.g. a Gateway Mobile Switching Centre (or GMSC), included within the home network 100. The international home gateway 118 is used for routing phone calls to or from the home network 100.

The transit network 16 includes another international foreign gateway (not represented).

A normal international communication path of the international phone call between the first phone 10 and the second phone 12 passes through the foreign network 14, the transit network 16 and the home network 100.

The SIM-box 18 (or the like) is an entity that allows making an international phone call that originates from an out-of network subscriber device/system, like a mobile phone cooperating with a SIM type token, and that appears as an in-network phone call.

The SIM-box 18 is connected schematically, through an interconnection link 19, to a Base Station Controller (or BSC) 110. The BSC 110 is included within the home network 100.

The SIM-box 18 plays a role of a gateway, i.e. is used for re-routing an international phone call between the first phone 10, as calling party, and the second phone 12, as called party. The international phone call, when re-routed through the SIM-box 18, bypasses a normal international communication path. The international phone call through the SIM-box 18 constitutes a wireless bypass call or communication. The wireless bypass communication passes through the foreign network 14, the SIM-box 18 and the home network 100.

The SIM-box 18 includes one or several microprocessors, as data processing means, one or several memories, as data storing means, and one or several Input/Output (or I/O) interfaces (not represented).

The SIM-box 18 hosts one or several SIM type cards or SIM type chips, as SIM type tokens (not represented). The SIM type tokens, as subscriber devices, are operated by an operator (or on its behalf) of the home network 100. The SIM type chips may be soldered within the SIM-box 18. The SIM-type tokens may be removable (or not) from the SIM-box 18. The SIM-type tokens may be pre-paid to the home network operator.

The SIM-box 18 cooperates with one SIM type token for each international phone call that is managed by the SIM-box 18. The SIM-box 18 is thus able to access the home network 100.

Within the present description, a token or termed secure element is a smart electronic object that is intended to communicate with the outside world, like notably a token host device.

As SIM type token, it may be any electronic device comprising one or several microprocessors, as data processing means, one or several memories (or being connected to one or several memories), and one or several I/O communication interfaces. The SIM type token may be constituted by any electronic medium, like a Secure Removable Module (or SRM), that supports a SIM type application and stores data relating to a subscriber, like an International Mobile Subscriber Identity (or IMSI), as a unique number associated with all GSM and UMTS network mobile phone users. The data relating to the subscriber allows identifying the subscriber to the home network 100. The SIM type token stores securely data relating to a subscription key, like an authentication key Ki. The data relating to the subscription key allows authenticating the subscriber to the home network 100. The SIM type application allows identifying a SIM type token and authenticating this latter to the home network 100.

The SIM type token may be embodied within a dongle of the Universal Serial Bus (or USB) type, a Secure Digital card (or SD card) or a chip to be fixed to a host device, possibly in a removable manner. The SIM type token may have different form factors.

As SIM type token, it may be a SIM type smart card. The SIM token may be, for instance, a SIM smart card for a GSM network, a Universal Subscriber Identity Module (or USIM) for a UMTS network, a Removable User Identity Module (or RUIM) and/or a Code Division Multiple Access (or CDMA) Subscriber Identity module (or CSIM) for a CDMA network.

For example, instead of being constituted by a SIM type smart card, the SIM type token may be constituted by a smart USB dongle, a mass-storage card like a MMC, a SD card, or a chip to be fixed, possibly in a removable manner, to a host computer, or a chip to be soldered within a host computer, like a SIM-box 18.

Naturally, the just aforementioned set relating to a SIM type token is not exhaustive. However, it is only for exemplifying purposes and is not considered to reduce the scope of the present invention.

The home network 100 processes notably communication data relating to a set of subscriber devices that are within areas (not represented) that are served and managed by the home network 100. The communication data includes data relating to out-of network phone calls.

The device of a subscriber, as device user, may be any kind of device that may be managed by an operator of the home network 100.

The subscriber device stores an IMSI, as data relating to the subscriber.

The subscriber device may store data relating to a concerned Mobile Equipment (or ME), like an International Mobile station Equipment Identity (or IMEI) and/or a Mobile Subscriber Integrated Digital network-Number (or MSISDN). The data stored within the subscriber device allows a home network entity(ies), like a server, to retrieve subscriber identification data.

The subscriber device may be a standalone entity or an entity that cooperates with one or several external devices, like a SIM type token with a mobile equipment, as SIM token host device and user terminal.

The subscriber device may be, among others, a token, a mobile phone, a handset, a Machine-to-Machine (or M2M) type device, a mobile laptop, a tablet, a Personal Digital Assistant (or PDA), a mobile TeleVision appliance, a game console, a personal computer (or PC), a set-up box and/or a netbook.

The subscriber device is located at a place where the subscriber device is under a radio-coverage of a cell (not represented) relating to the home network 100.

The subscriber device may be fixed, i.e. it does not move, or mobile.

The subscriber device may cooperate or not with a SIM token host device, so that the SIM token host device operates.

The home network 100 includes a first Mobile Switching Center (or MSC) 112 and a second MSC 120, as home network MSCs.

The first MSC 112 is connected, through a first wire link 111, to the BSC 110.

The first MSC 112 serves and manages a first area in which one or several subscriber devices (not represented), among which there is(are) the SIM type token(s) that is(are) hosted by the SIM-box 18, are located.

The first MSC 112 is connected, through a second wire link 113, to a proxy-EIR 114, as a device for managing a subscriber device.

The first MSC 112 is connected, through a wire link 117, to the international home gateway 118.

The second MSC 120 is connected, through a wire link 119, to the international home gateway 118.

The second MSC 120 serves and manages a second area in which one or several subscriber devices (not represented), among which there is the second phone 12, are located.

The second MSC 120 is schematically connected, through a link 101, over a BSC (not represented) and a Base Station (or BS) (not represented), to the second phone 12.

According to a particular scenario, instead of two separated MSCs, only one MSC, namely the first MSC 112 or the second MSC 120, serves and manages both the SIM-box 18 and the second phone 12.

Each of the first MSC 112 and the second MSC 120 is either connected to a Visitor Location Register (or VLR) (not represented) or integrated with a VLR within one and the same network entity.

The VLR includes a database of the subscribers which are within the area that is managed by the associated MSC. Data relating to each subscriber is stored within a subscriber device.

A subscriber location includes preferably an identifier relating to a cell under a radio-coverage of the home network 100.

Instead of a cell identifier, a subscriber location may include coordinates relating to a Global Positioning System (or GPS).

Each of the first MSC 112 and the second MSC 120 is able to interrogate the VLR, in order to determine where a subscriber device is located.

Each BS (not represented) relating to the home network 100 is served by the VLR.

Each of the first MSC 112 and the second MSC 120 is able to route a phone call or data intended to and/or originating from a subscriber device that is present within the area that is associated with the concerned MSC. The data may be included within a message, like a Short Message Service (or SMS) type message, that is sent to or from the subscriber device.

Each of the first MSC 112 and the second MSC 120 is able to connect an incoming call to a subscriber device that is present within the associated area that is managed by the concerned MSC.

The first MSC 112 and the second MSC 120 are connected to a Home Location Register (or HLR) (not represented).

Each of the first MSC 112 and the second MSC 120 is able to get from the HLR data relating to a SIM token host device, like an identifier relating to a mobile equipment, such as an MSISDN. To get the data relating to a SIM token host device, the MSC provides the HLR with a corresponding request accompanied with data relating to a concerned subscriber, like the IMSI, as an identifier relating to a SIM type token, as subscriber device.

The HLR stores within a database (not represented) data relating to subscribers who are authorized to use the home network 100. The HLR records, e.g. a set of IMSIs, as data or identifiers relating to the subscriber devices. Each IMSI is associated with an MSISDN that allows routing data to the SIM type token host mobile equipment.

The VLR is able to inform the HLR that a subscriber device is entered into the area covered by the VLR.

The home network 100 includes an Equipment Identity Register (or EIR) 116.

The EIR 116 may be integrated within the HLR.

The EIR 116 stores within a database (not represented) a set of identifiers relating to mobile equipments which are to be either banned from the home network 100 or monitored. The concerned mobile equipments may be mobile stations that are stolen, unauthorized or defective on the home network 100. The EIR 116 is able thus to track mobile equipments that may be stolen or the like. The EIR 116 may forbid the concerned mobile equipments to access the home network 100.

The database includes a black set of mobile equipments that are prohibited to access the home network 100.

The database may include a white set of mobile equipments that are expressly authorized to access the home network 100.

The database may include a grey set of mobile equipments that are authorized to access the home network 100 under supervision.

The home network 100 includes preferably a proxy-EIR 114, as a device for managing a subscriber device.

Alternately, the device for managing a subscriber device is outside of the home network 100 while being connected to the home network 100.

The proxy-EIR 114 is connected, through a wire link 113, to the MSC 112 and, through another wire link 115, to the EIR 116.

According to an alternative embodiment, when the home network 100 does not include an EIR, the device for managing a subscriber device also plays the role of the EIR.

The proxy-EIR 114 is preferably standard and compliant with the home network infrastructure.

The proxy-EIR 114 may be located within premises relating to a home network operator.

The proxy-EIR 114 includes a microprocessor(s) (not represented), as means for processing data, a memory(ies) (not represented), as means for storing data, and two or more I/O interfaces (not represented), as means for exchanging data with outside.

According to the invention, the proxy-EIR 114 is configured to intercept a request message for requesting whether a mobile equipment has or has not been stolen or the like.

Alternately, the intercepted message includes a request for determining whether the mobile equipment is authorized or forbidden to access the home network 100.

According to another alternative embodiment, the intercepted message includes a request for determining whether the mobile equipment is or is not defective.

The proxy-EIR 114 monitors one and the same national signalling traffic originating from the first MSC 112 and intended to the EIR 116.

The proxy-EIR 114 is adapted to detect any subscriber under a radio-coverage of the home network 100.

To carry out such a subscriber detection, the proxy-EIR 114 is configured to intercept a request message that originates from the first MSC 112 and that is addressed to the EIR 116.

The proxy-EIR 114 plays thus a role of a relay between the first MSC 112 and the EIR 116, notably for any request message.

The request message includes a message relating to an identified Mobile Equipment (or ME). The request message encompasses, besides data relating to a mobile equipment or the like, data relating to an associated subscriber.

The proxy-EIR 114 is preferably an Over-The-Air (or OTA) or Over-The-Internet (or OTI) accessible entity.

The proxy-EIR 114 is adapted to interpret any message that the proxy-EIR 114 intercepts and to collect information included within the intercepted message.

The proxy-EIR 114 is adapted to track or detect data relating to a subscriber, for each subscriber concerned within an intercepted message, an identifier relating to a terminal. The terminal cooperates preferably with a SIM type token that is coupled to or embedded within the terminal.

The proxy-EIR 114 is preferably adapted to determine, for each subscriber concerned within an intercepted message, an associated subscriber location.

The proxy-EIR 114 centralizes information relating to each subscriber that is involved within a phone call.

The proxy-EIR 114 plays a role of a manager of subscriber devices, like SIM type tokens that may cooperate with a SIM-box 18 or the like.

The proxy-EIR 114 manages a counter for each newly detected subscriber that is concerned by any request message that the proxy-EIR 114 has intercepted.

The counter for each subscriber is initially set to a predefined value, e.g. zero at the first occurrence of an intercepted message. More exactly, once a subscriber has been concerned and detected within an intercepted message, as a first intercepted message for the concerned subscriber, the proxy-EIR 14 initialises the counter.

The proxy-EIR 114 is adapted to increment the counter, each time, the proxy-EIR 114 detects, within the intercepted message, one and the same subscriber that is used according to one predetermined abnormal operation condition. The intercepted message is the last intercepted message and constitutes a second (or more) intercepted message for the concerned subscriber.

A determination that a predetermined abnormal operation condition(s) may be satisfied or not during a predetermined time period and during a predetermined busy time period, i.e. while the concerned assumed mobile equipment is communicating with the home network 100.

A predetermined abnormal operation condition may be that, for a given subscriber concerned within two or more corresponding intercepted messages, an associated mobile equipment has changed, i.e., for one and the same subscriber, an associated reference mobile equipment has been identified during a phone call and another mobile equipment has been identified during another phone call.

A predetermined abnormal operation condition may be that, for a given subscriber concerned within two or more corresponding intercepted messages, an associated subscriber location has not changed, i.e., for one and the same subscriber, one and the same reference subscriber location has been identified during a phone call and another phone call.

The predetermined time period may comprise one or several days, one or several weeks and/or one or several months.

The predetermined busy time period may include one or several hours and/or one or several days. For instance, a great number of busy hours may be observed and a great number of phone calls that occur during one and the same day may be observed.

The predetermined time period and/or busy time may depend on the home network 100 and the tracked phone communications.

The proxy-EIR 114 is adapted to register, if the counter matches a predetermined threshold, the detected subscriber as belonging to a wireless bypass subscriber set.

A value of the predetermined threshold may be equal to an integer value, like three or more, that may be fixed or configured according to a particular local environment relating to the home network 100.

An analysis carried out by the proxy-EIR 114 for each detected subscriber is further detailed infra in relation with the Figure 3.

The proxy-EIR 114, after its analysis, stores within a database (not represented) a set of data relating to at least a part of the detected subscribers.

The database includes data relating to a result of an analysis relating to each detected subscriber. The data relating to a result of an analysis relating to each detected subscriber comprises, for each detected subscriber, the concerned subscriber data. The data relating to a result of an analysis relating to each detected subscriber may comprise an associated counter value, data relating to each associated mobile equipment and data relating to each associated subscriber location.

The proxy-EIR 114 stores within the database a set of data relating to subscribers which are suspected to belong to a wireless bypass subscriber set.

The proxy-EIR 114 or another entity that is informed by the proxy-EIR 114 may undertake an action(s) for the subscribers that are suspected to belong to a wireless bypass subscriber set.

The proxy-EIR 114 is able thus to track subscribers that are suspected to cooperate within a SIM-box 18 (or the like). The proxy-EIR 114 may forbid directly or indirectly the concerned subscribers to access the home network 100.

The database may include a black set, as part or the whole of the wireless bypass subscriber set, of subscribers that are forbidden or prohibited to communicate with the home network 100.

The database may include a white set of subscribers that are expressly authorized to communicate with the home network 100.

The database may include a grey set of subscribers that are authorized to communicate with the home network 100 under supervision.

Figure 2 depicts an exemplary embodiment of the invention method 20 for managing a subscriber device.

It is assumed that the first phone 10, as a calling party, communicates during an international phone call with the second phone 12, as a called party.

The proxy-EIR 114 surveys each message intended to the EIR 116 and analyses the concerned message(s) for each subscriber preferably during a predetermined time period.

The proxy-EIR 114 surveys each subscriber to the home network 100 and under a radio-coverage of the home network 100.

It is assumed that the SIM type tokens hosted by a SIM-Box 18 (or the like) belong to a company or person who constitutes a malicious operator.

A Check-IMEI type message is exchanged between an MSC and the EIR 116 of the home network 100, prior to an execution of each of the following services:
- an attachment to the home network 100;
- an Inter-VLR Location Update;
- an Intra-VLR Location Update;
- a periodic Location Update;
- a Mobile SMS Origination;
- a Mobile SMS Termination;
- a Mobile Terminating Call (or MTC);
- a Mobile Originating Call (or MOC).

The network entities that include the first MSC 112 and the EIR 116 exchange data by using a Mobile Application Protocol (or MAP) type protocol or the like. The network entities may exchange by using any other kind of data communication protocol.

The first MSC 112 sends a MAP _Check_IMEI (or the like), as a request message 22 for requesting whether a mobile equipment, as either a host device hosting a subscriber device or a standalone subscriber device (i.e. without hosting any SIM type token), has or has not been stolen or the like.

The request message 22 is intended to the EIR 116.

The request message 22 allows the first MSC 112 to know, based upon an associated response, whether the mobile equipment, when applicable, is allowed or disallowed to access the home network 100.

In the invention context, the request message 22 includes an IMSI, as data relating to a subscriber.

If the subscriber device is a SIM type token that is coupled to or embedded within the SIM-box 18 (or the like), then the concerned associated mobile equipment is the SIM-box 18 (or the like).

Otherwise, if the mobile equipment is a genuine mobile equipment, i.e. a mobile equipment that is used by a subscriber to a home network, then the mobile equipment may either be (or not) coupled to or embed (or not) a SIM type token. The mobile equipment may support a SIM type application, instead of cooperating with a SIM type token, as a secure device that stores and manages data in a protected and confidential manner.

The request message 22 includes preferably an IMEI, as an identifier relating to the concerned mobile equipment associated with the concerned subscriber.

The request message 22 may include an MSISDN, as a phone number and data associated with the concerned subscriber.

If the request message 22 does not include any MSISDN, then the proxy-EIR 114 may send to the HLR (not represented) a message (not represented) including a MAP-Send Routing Information for LoCation Services (or SRIforLCS) type request, as a request for getting a corresponding MSISDN, including the IMSI, as data relating to the concerned associated subscriber.

The proxy-EIR 114 may send to the HLR (not represented) a MAP-Any Time Interrogation (or ATI) type request (not represented), as a request for getting a corresponding identity relating to the latest known cell. The MAP-ATI message allows requesting to the HLR information relating to the location where the subscriber is present. Then, the HLR queries the appropriate home network MSC to carry out a VLR look-up to get the requested location information. The HLR sends to the proxy-EIR 114 a message (not represented), as MAP-ATI type request response, including the latest known cell identity, as home cell identity. The proxy-EIR 114 obtains thus the home cell identity for the concerned subscriber. The proxy-EIR 114 is able to detect that the concerned subscriber is still located within one and the same cell relating to the home network 100. If the proxy-EIR 114 observes that the subscriber does not move with respect to a previous detected reference subscriber location, then the proxy-EIR 114 may store the detected subscriber, as belonging to a wireless bypass subscriber set.

The proxy-EIR 114 recognizes and intercepts any request message intended to the EIR 116 and to forward to the EIR 116 the request message.

The proxy-EIR 114 interprets and analyses each intercepted message, so as to determine whether the concerned subscriber is suspected or not to either be or cooperate with a SIM-box 18 (or the like).

The analysis of the proxy-EIR 114 is further detailed infra in relation with the Figure 3.

The proxy-EIR 114 sends to the EIR 116 the MAP_Check_IMEI (or the like) 24, as the request message 24 for requesting whether the mobile equipment has or has not been stolen or the like.

After several interceptions and analysis of request messages comprising one and the same subscriber, once the proxy-EIR 114 suspects that the assumed associated mobile equipment is a SIM-type box or the like, the proxy-EIR 114 registers the detected subscriber within a wireless bypass subscriber set.

The proxy-EIR 114 may undertake one or several predetermined actions for each detected subscriber that is suspected to be a wireless bypass subscriber.

The proxy-EIR 114 may send to a server and/or another entity(ies) (not represented) a message including an alert relating to the detected subscriber, as belonging to a wireless bypass subscriber set. The message may include, besides the alert, part or all the data relating to a result of an analysis relating to the concerned detected subscriber.

Alternately, the proxy-EIR 114 sends to the EIR 116 a request for blocking a wireless bypass communication with the detected subscriber within the request message 24 for requesting whether the mobile equipment has or has not been stolen or the like while replacing the concerned IMEI by a predetermined IMEI that belongs to a black set of mobile equipments and has to be forbidden to communicate with the home network 100. The proxy-EIR 114 knows, e.g. further to one or several messages received from the EIR 116, one or several IMEI that belongs to a black set of mobile equipments.

According to another alternative embodiment (not represented), instead of addressing the EIR 116, the proxy-EIR 114 sends directly, i.e. without involving the EIR 116, to the first MSC 112, as an MSC that issues the request message 22, a request for blocking a wireless bypass communication with the detected subscriber.

Such a request for blocking a wireless bypass communication with the detected subscriber allows to prevent the detected subscriber from further communicating with the home network 100 while specifying the data relating to the concerned subscriber.

The EIR 116 sends to the proxy-EIR 114 a message 26, as a response to the request whether the mobile equipment has or has not been stolen or the like, including a response relating to the concerned mobile equipment. As the request response, it may be a message 26 that comprises the concerned mobile equipment is expressly authorized set of mobile equipments, as belonging to a white set, is authorized to access the home network 100 under supervision, as belonging to a grey set, or is not authorized to access the home network 100, as belonging to a black set.

The proxy-EIR 114 may be adapted to receive any request response message that originates from the EIR 116 and that is addressed to the first MSC 112 and to forward the received message to the first MSC 112, i.e. without modifying any data included within the response message.

Alternately, the EIR 116 sends directly, i.e. without passing through the proxy-EIR 114, to the first MSC 112 a request response message (not represented) that includes, besides the request response relating to the concerned mobile equipment, data relating to a result of an analysis relating to the detected subscriber. According to such an embodiment, the proxy-EIR 114 sends previously to the EIR 116 a message including the data relating to a result of an analysis relating to the detected subscriber.

Once the proxy-EIR 114 has received the message 26 including the request response, the proxy-EIR 114 sends to the first MSC 112 a message 28 including the request response originating from the EIR 116.

Optionally, such a message 28 includes data relating to a result of an analysis relating to the concerned subscriber and that is carried out by the proxy-EIR 114.

**Figure 3** shows an exemplary embodiment of the invention method 30 for managing a subscriber device.

It is assumed that the proxy-EIR 114 has detected, within a first intercepted request message including a IMEI 1, as data relating to a first mobile equipment, and an IMSI 1, as data relating to an associated subscriber.

It is further assumed that the proxy-EIR 114 has determined, for the detected subscriber IMSI 1, a subscriber location LOC1, as reference subscriber location.

The proxy-EIR 114 stores 32 within the database the detected subscriber IMSI 1, the associated first mobile equipment IMEI 1, as reference mobile equipment identifier, and the associated subscriber location LOC1, as reference subscriber location.

For the detected subscriber IMSI 1, as its first occurrence within an intercepted request message, the proxy-EIR 114 initialises 34 a counter 1 associated with the detected subscriber IMSI 1 by setting the counter 1 value to zero.

The proxy-EIR 114 stores the counter 1 value associated with the detected subscriber.

Then, the proxy-EIR 114 analyses 36 whether the proxy-EIR 114 intercepts another request message relating to the concerned detected subscriber IMSI 1 preferably during a predetermined busy time period, as a new analysis step 36.

If the proxy-EIR 114 does not intercept another request message relating to the concerned detected subscriber IMSI 1, then the proxy-EIR 114 continues to analyze 36 whether the proxy-EIR 114 intercepts another request message relating to the concerned detected subscriber IMSI 1.

On the contrary, i.e. if the proxy-EIR 114 does intercept another request message relating to the concerned detected subscriber IMSI 1, the proxy-EIR 114 increments 38 the associated counter 1 by adding, e.g. one to its previous value.

Once the counter 1 associated with the detected subscriber IMSI 1 has been incremented, the proxy-EIR 114 analyses 310 whether the associated counter 1 matches a predetermined threshold T, as an abnormal operation detection step.

If the counter 1 associated with the detected subscriber IMSI 1 matches the predetermined threshold T, then the proxy-EIR 114 registers 312 the detected subscriber IMSI 1 as belonging to a wireless bypass subscriber set.

Optionally, the proxy-EIR 114 registers, besides the detected subscriber IMSI 1, data relating to a result of an analysis relating to each detected subscriber.

Otherwise, i.e. if the counter 1 associated with the detected subscriber IMSI 1 does not match the predetermined threshold T, then the proxy-EIR 114 analyses whether the surveyed subscriber is associated with one or several abnormal operation conditions.

As an abnormal operation detection step, the proxy-EIR 114 analyses 314 whether the surveyed and detected subscriber is not associated with the associated first mobile equipment IMEI 1, as reference mobile equipment identifier.

If the detected mobile equipment identifier IMEI 2 does not match the associated first mobile equipment IMEI 1, the proxy-EIR 114 increments 316 the counter 1 associated with the concerned subscriber.

Then, the proxy-EIR 114 analyses 318 whether the associated counter 1 matches a predetermined threshold T, as an abnormal operation detection step.

If the counter 1 associated with the detected subscriber IMSI 1 matches the predetermined threshold T, then the proxy-EIR 114 registers 320 the detected subscriber IMSI 1 as belonging to a wireless bypass subscriber set.

Optionally, the proxy-EIR 114 registers, besides the detected subscriber IMSI 1, data relating to a result of an analysis relating to each detected subscriber.

Otherwise, i.e. if the counter 1 associated with the detected subscriber IMSI 1 does not match the predetermined threshold T, then the proxy-EIR 114 continues to survey the detected subscriber by going back to the new analysis step 36.

If the detected mobile equipment identifier matches the associated reference mobile equipment identifier IMEI 1, then the proxy-EIR 114 may analyse whether the surveyed subscriber is associated with at least one other abnormal operation condition.

As an abnormal operation detection step, the proxy-EIR 114 analyses 322 whether the surveyed and detected subscriber is still associated with the associated subscriber location LOC1, as reference subscriber location.

If the determined subscriber location matches the associated reference subscriber location, then the proxy-EIR 114 increments 316 the counter 1 that is associated with the detected subscriber.

Then, the proxy-EIR 114 analyses 318 whether the counter 1 associated with the detected subscriber matches the predetermined threshold T, as an abnormal operation detection step.

If the counter 1 associated with the detected subscriber IMSI 1 matches the predetermined threshold T, then the proxy-EIR 114 registers 320 the detected subscriber IMSI 1 as belonging to a wireless bypass subscriber set.

Otherwise, i.e. if the counter 1 associated with the detected subscriber IMSI 1 does not match the predetermined threshold T, then the proxy-EIR 114 continues to survey the detected subscriber by going back to the new analysis step 36.

If the determined subscriber location does not match the associated reference subscriber location, i.e. the subscriber moves, then the proxy-EIR 114 continues to survey the detected subscriber by going back to the new analysis step 36.

Alternately, the proxy-EIR 114 analyses whether the surveyed subscriber is associated with one or several other abnormal operation conditions. (not represented).

The proxy-EIR 114 is able to suspect, after having detected a certain number of predetermined abnormal operation conditions, that a subscriber is associated with a SIM type token host device that is, instead of an assumed mobile equipment, a SIM-box type entity or the like.

The invention solution allows thus tracking a subscriber device.

The invention solution is user friendly since no user, neither the calling party's one nor the called party's one, is involved.

The invention solution is compatible with notably the existing mobile network infrastructures and the existing exchanged messages between the network entities. No additional Signalling System N°7 (or SS7) signalling message is required.

The invention solution offers a real time tracking since it is based on an interception of messages that are intended to the EIR of the home network 100.

The invention solution is simple and therefore cheap to implement since only one communication link, namely a home network link, is to be surveyed and monitored.

The embodiment that has just been described is not intended to limit the scope of the concerned invention. Other embodiments may be given. As another embodiment, instead of exchanging with a dedicated proxy-EIR 114, the EIR 116 is dedicated to tracking subscriber devices.

According to another embodiment, instead of being implemented by mobile network entities relating to the GSM and/or UMTS network, the man skilled in the art is able to implement the invention by using network entities relating to the LTE network (or other) and corresponding messages. Among others, a Home Subscriber Server (or HSS) relating to the LTE network replaces the HLR relating to the UMTS network and a Mobility Management Entity (or MME) relating to the LTE network replaces each MSC relating to the UMTS network while the EIR is present within the LTE network.

## Claims

1. A method (20) for managing a subscriber device,
**characterized in that** the method comprises the following steps:
- an interception step in which a device intercepts a request message (22) for requesting whether a mobile equipment has or has not been stolen, the request message including data relating to a subscriber, the request message originating from a Mobile Switching Centre type entity (112) relating to a home mobile network (100) and being addressed to an Equipment Identity Register type entity (116) relating to the home mobile network;
- at least one abnormal operation detection step (36) in which the device increments a counter, each time, the device detects or determines, within the intercepted message, one and the same subscriber that is used according to at least one predetermined abnormal operation condition; and
- a subscriber registration step in which if the counter matches a predetermined threshold, then the device stores (312) the detected subscriber as belonging to a wireless bypass subscriber set.

2. Method according to claim 1, wherein the at least one abnormal operation detection step comprises a first predetermined abnormal operation detection step (314) in which the device detects that, within the intercepted message, for one and the same subscriber, an associated mobile equipment identifier does not match a previously detected reference mobile equipment identifier.

3. Method according to any previous claim, wherein the at least one abnormal operation detection step comprises a second predetermined abnormal operation detection step (322) in which the device determines that, within the intercepted message, for one and the same subscriber, an associated subscriber location does match a previously determined reference subscriber location.

4. Method according to claim 3, wherein the subscriber location includes an identifier relating to a cell under a radio-coverage of the home mobile network.

5. Method according to any previous claim, wherein the method further comprises a subscriber device blocking step in which the device requests the Equipment Identity Register relating to the home mobile network to block a wireless bypass communication with the detected subscriber.

6. Method according to any previous claim, wherein the subscriber device includes a terminal or a token.

7. Method according to any previous claim, wherein the request message (22) includes a message of a check_IMEI type.

8. A device (114) for managing a subscriber device,
**characterized in that** the device is adapted:
- to intercept a request message for requesting whether a mobile equipment has or has not been stolen, the request message including data relating to a subscriber, the request message originating from a Mobile Switching Centre type entity (112) relating to a home mobile network and being addressed to an Equipment Identity Register type entity (116) relating to the home mobile network (100);
- to increment a counter, each time, the device detects or determines, within the intercepted message, one and the same subscriber that is used according to at least one predetermined abnormal operation condition; and
- to store, if the counter matches a predetermined threshold, the detected subscriber as belonging to a wireless bypass subscriber set.

9. Device according to claim 8, wherein the device includes an entity (114) included within the home mobile network.

10. Device according to claim 8 or 9, wherein the device includes a server.
